# EUROPÄISCHE PATENTSCHRIFT

(11) **EP 0 547 289 B1**
(45) Veröffentlichungstag und Bekanntmachung des Hinweises auf die Patenterteilung: **02.04.1997**
(21) Anmeldenummer: 92111998.8
(22) Anmeldetag: 14.07.1992
(51) Int. Cl.: B23Q 9/00, B23D 47/02

(54) **Einrichtung zur Aufnahme eines Werkstücks und eines handbetätigbaren motorgetriebenen Werkzeugs**
Device for receiving a workpiece and a motor-driven, manually operated tool
Dispositif pour recevoir une pièce et un outil à opération manuelle entraînée par un moteur

(30) Priorität: 25.11.1991 YU 1851/91
(43) Veröffentlichungstag der Anmeldung: 23.06.1993
(73) Patentinhaber: Span, Joze, YU-61113 Ljubljana (YU)
(72) Erfinder: Span, Joze, YU-61113 Ljubljana (YU)
(74) Vertreter: Viering, Jentschura & Partner

(56) Entgegenhaltungen:
- DE-A- 3 213 425
- DE-C- 434 231
- US-A- 2 525 712
- US-A- 2 602 474
- US-A- 2 602 474
- US-A- 2 611 398
- US-A- 2 696 851

## Beschreibung

Die Erfindung ist dem Gebiet der Arbeitsverfahren zuzurechnen und im Rahmen dieser Arbeitsverfahren bezieht sie sich auf Werkzeugmaschinen, und im Zusammenhang mit letzteren bezieht sie sich insbesondere auf Werkzeugmaschinen betreffende Einzelheiten, Bestandteile bzw. Hilfsmittel, die weder auf einen bestimmten zu behandelnden Werkstoff noch auf ein bestimmtes Bearbeitungsergebnis ausgerichtet sind.

Es lag das Problem vor, eine Hilfseinrichtung zu entwickeln, die einerseits die Aufnahme, erforderlichenfalls auch die Befestigung eines Werkstücks und andererseits die Aufnahme und Unterstützung eines handbetätigbaren motorgetriebenen Werkzeugs sowie die Durchführung gewisser Hilfsbewegungen dieses in einem vorgegebenen Arbeitsraum an beliebiger Stelle und in beliebiger Weise angeordneten Werkzeugs ermöglicht, damit das eigentliche Werkzeug stetig überwacht werden kann und außerdem zum Anbringen einer Antriebs-/Bearbeitungs-Werkzeugeinheit kein sich über dem Werkstück erstreckender Brückenträger erforderlich ist.

Aus dem Fertigungsprogramm der Firma OMGA S.p.A. (Italien) ist unter der Handelsbezeichnung "radial arm saw" eine Vorrichtung bekannt, die einen Arbeitstisch, der zwecks Anpassung an die Bearbeitungserfordernisse auswechselbar ist, einen außerhalb des Arbeitstisches angeordneten Verbundpfeiler, dessen Höhe veränderbar ist, und eine am freien Ende dieses Pfeilers befestigte, um die Pfeilerachse schwenkbar angeordnete Konsole mit einem hängenden Support zum Aufnehmen und Tragen einer Antriebs-/Bearbeitungs-Werkzeugeinheit aufweist. Ein Nachteil dieser Vorrichtung besteht darin, daß die Übersicht über das Werkzeug umso geringer ist, je näher die Antriebs-Bearbeitungseinheit auf der Konsole am Pfeiler der Vorrichtung befestigt ist, d.h. daß der Teil der Konsole, der nicht ausgenutzt ist, ein bedeutendes Hindernis darstellt.

Gemäß der DE 34 24 533 A1 wurde zur Behandlung eines bahnförmigen Guts ein beweglicher, quer zur Bahnrichtung des Werkstücks gestellter Brückenträger vorgeschlagen, auf welchem eine wagenähnliche Einrichtung in ihrer Längsrichtung beweglich angeordnet ist, wobei an dem einem freien Ende dieser Einrichtung eine Ahtriebs-/Bearbeitungseinheit befestigt ist. Wie bei der ersterwähnten Lösung ist auch hier keine Bearbeitungsoperation unmittelbar unterhalb des Brückenträgers möglich und die Vorrichtung ermöglicht auch keine Bearbeitung eines Werkstücks, dessen Breite die unterhalb des Brückenträgers vorliegende Nennweite überschreitet.

Weiter ist es durch die US-A-2 525 712 bekannt, einen Adapter zur Aufnahme eines handbetätigbaren motorgetriebenen Werkzeugs von unten an ein vertikales Rohr anzuschließen, das höhenverstellbar und um die Rohrachse winkelverstellbar in einem Werkzeugkopf abgestützt ist, welcher an einem als Vierkantrohr, dessen eine Diagonale vertikal verläuft, ausgebildeten Konsolbalken festgelegt ist, der im Kopf einer Säule rollengelagert ist, an deren Basis ein Arbeitstisch für das zu bearbeitende Werkstück ausgebildet ist.

Schließlich ist aus der US-A-2 602 474 eine Einrichtung nach dem einleitenden Teil des Patentanspruchs 1 bekannt. Hierbei ist der Konsolbalken als der eine von zwei Armen einer gabelförmigen Stützvorrichtung aus Rundstangen ausgebildet, die ihrerseits auf einem radial abstehenden Randflansch der Lagerungs-Stellwinkel-Baugruppe rollengelagert ist. Diese weist eine nach unten offene zylindrische Kappe auf, an der die Gabelarme tangential festgelegt sind und die auf einer von unten in sie eingreifenden Rundscheibe drehbar abgestützt ist, die ihrerseits auf den beiden vertikalen Trägern abgestützt ist.

Erfindungsgemäß weist die Einrichtung zur Aufnahme eines Werkstücks sowie eines handbetätigbaren motorgetriebenen Werkzeugs mit einen Adapter zur Aufnahme des motorgetriebenen Werkzeugs, der von unten an ein vertikales, höhenverstellbares Rohr angeschlossen ist, eine um eine vertikale Achse drehbare Lagerungs-Stellwinkel-Baugruppe und zwei vertikale Träger auf, die parallel zu einer Seite eines Arbeitstisches angeordnet und durch einen Querträger miteinander verbunden sind. Die Lagerungs-Stellwinkel-Baugruppe ist am Querträger aufgehängt, und das höhenverstellbare Rohr ist mit einem Konsolbalken verbunden, der, zur Durchführung einer geradlinigen Bewegung rollengelagert, an der Lagerungs-Stellwinkel-Baugruppe aufgehängt ist.

Die Lagerungs-Stellwinkel-Baugruppe weist ein Kreuzstück und zwei daran angeschlossene Gehäuse-Seitenstücke auf.

Das Kreuzstück besteht aus einem am oberen Abschnitt seiner Mantelfläche mit einer Winkelmesser-Gradeinteilung versehenen Hohlzylinderteil, an dessen Sockelteil vier einen quadratischen Grundriß bildende Flanschlaschen angeformt sind, von denen je zwei jeweils ein Gehäuse-Seitenstück tragen.

An die erwähnten beiden, das jeweilige Gehäuse-Setenstück tragenden Flanschlaschen ist ein waagerechter Abschnitt als Steg des in Form eines überbreiten Buchstabens H ausgebildeten Gehäuse-Seitenstücks angeschlossen.

Ein jeweiliger an den waagerechten Abschnitt angeschlossener, den vertikalen Teil des Buchstabens H bildender Abschnitt des Gehäuse-Seitenstücks ist im Querschnitt in Form des Zeichens Σ ausgebildet, das so geformt ist, daß sämtliche inneren Winkel jeweils 90° betragen, wobei der betreffende Abschnitt in Längsrichtung beidseitig durch je eine quergestellte Schließwand begrenzt ist und in den durch die beiden Schließwände begrenzten oberen und unteren Kammern des jeweiligen senkrechten Endabschnitts des Gehäuse-Seitenstücks ist lagefest je ein Wälzlager eingebaut, das mit der Oberfläche des Konsolbalkens zusammenarbeitet.

Zwei Ausführungsformen einer Anschließlagerstelle zur Aufnahme einer Antriebs-/Bearbeitungseinheit, wie sie durch die vorliegende Erfindung vorgeschlagen werden, werden im folgendem anhand diesbezüglicher Ausführungsbeispiele näher beschrieben, die aus der Zeichnung ersichtlich sind, in der zeigen:
- Fig. 1: die Draufsicht auf die erfindungsgemäße Einrichtung gemäß einer "ersten" Ausführungsform der Anschließlagerstelle zur Aufnahme einer Antriebs-/Bearbeitungseinheit,
- Fig. 2: einen Aufriß zu Fig. 1,
- Fig. 3: einen Schnitt der Einrichtung entlang der Linie III-III in Fig. 2,
- Fig. 4: eine Draufsicht in Richtung des Pfeils IV in Fig. 2 auf die Lagerungs-Stellwinkel-Baugruppe der Einrichtung,
- Fig. 5: einen Schnitt eines Teils der Einrichtung entlang der Linie V-V in Fig. 1,
- Fig. 6: eine "zweite" Ausführungsform der Anschließlagerstelle zur Aufnahme der Antriebs-/Bearbeitungseinheit, analog zu Fig. 2 dargestellt, und
- Fig. 7: einen Schnitt durch die Anschließlagerstelle der Fig. 6 entlang der Linie VII-VII in Fig. 6.

Ein Grundbestandteil der vorliegenden Einrichtung ist ein Ständer 1, der in der dargestellten Ausführung aus zwei vertikalen Trägern 2, die am oberen Ende unter Zwischenschaltung eines Querträgers 3 starr miteinander verbunden sind, und zwei am Sockelteil des jeweiligen vertikalen Trägers 2 starr angeschlossenen, rechtwinklig zu der die vertikalen Träger 2 und den Querträger 3 enthaltenden Ebene gestellten, gleichsinnig orientierten, in Längsrichtung gelegenen Trägern 4 besteht, auf welchen ein Arbeitstisch 5 festgelegt ist. Dieser weist vorteilhafterweise eine Anschlagleiste 6 zum Anlehnen von Werkstücken auf.

Im Falle einer "leichten", d.h. Heimwerkerausfühmng, um die es sich beim dargestellten Beispiel handelt, sind die Träger 2 und 4 blechartige scharfkantige C-Profile, und der Träger 3 ist in Form eines Rohres mit einem vierkantigen, im gegebenen Fall quadratischen Querschnitt ausgebildet. Die Träger 2, 3, 4 und der Arbeitstisch 5 sind miteinander verschraubt (über Schrauben miteinander verbunden).

Im Mittelbereich des Querträgers 3 zwischen den vertikalen Trägern 2 ist auf dem Träger 3 ein länglicher Aufhängeträger 7 frei gelegt, der im gegebenen Fall als ein scharfkantiges, nach unten offenes U-Profil ausgebildet ist. Die Nennweite des letzterwähnten U-Profils ist im wesentlichen an die Breite des Querträgers 3 angepaßt; die vertikalen Wände des U-Profils reichen dabei nach unten nicht über den unteren Rand des Querträgers 3 hinaus und die Länge des Aufhängeträgers 7 beträgt vorteilhaft etwa ein Drittel der Länge des Querträgers 3. Dadurch wird erfindungsgemäß der Deformierungen am stärksten ausgesetzte Abschnitt des Querträgers 3 in seiner Steifigkeit verstärkt.

Im Bereich unterhalb des Aufhängeträgers 7 ist von unten zum Querträger 3 hin eine Kreisrundplatte 8, deren Durchmesser vorteilhafterweise größer als die Länge des Aufhängeträgers 7 ist, angedrückt.

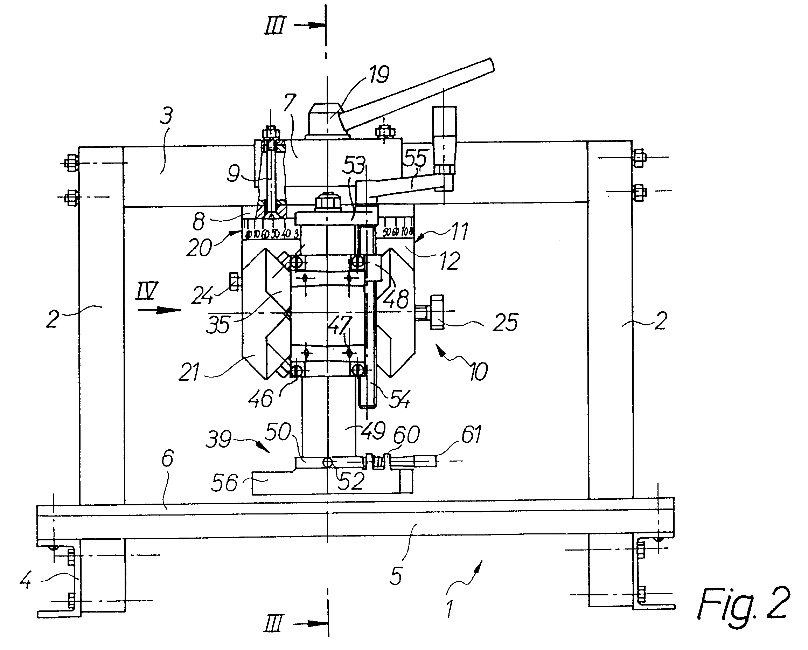

Durch die Kreisrundplatte 8, den Querträger 3 und den Aufhängeträger 7 sind von unten Schrauben 9 (siehe z.B. den Teilschnitt in Fig. 2), vorzugsweise jeweils zwei an den Enden des Aufhängeträgers 7, eingesetzt, über die die vorher aufgezählten Elemente zu einer stabilen Konstruktion verbunden sind. Bei den Schrauben 9 handelt sich es um Senkkopfschrauben, so daß kein Teil der Schrauben 9 nach unten über die Kreisrundplatte 8 hinausragt.

Zur Kreisrundplatte 8 hin ist von unten eine Lagerungs-Stellwinkel-Baugruppe 10 angedrückt, die eine der wesentlichen Bestandteil-Baugruppen der vorliegenden Einrichtung darstellt. Die Verbindung der Lagerungs-Stellwinkel-Baugruppe 10 mit den bereits erwähnten Bestandteilen der Einrichtung wird aus der nachstehenden Beschreibung ersichtlich.

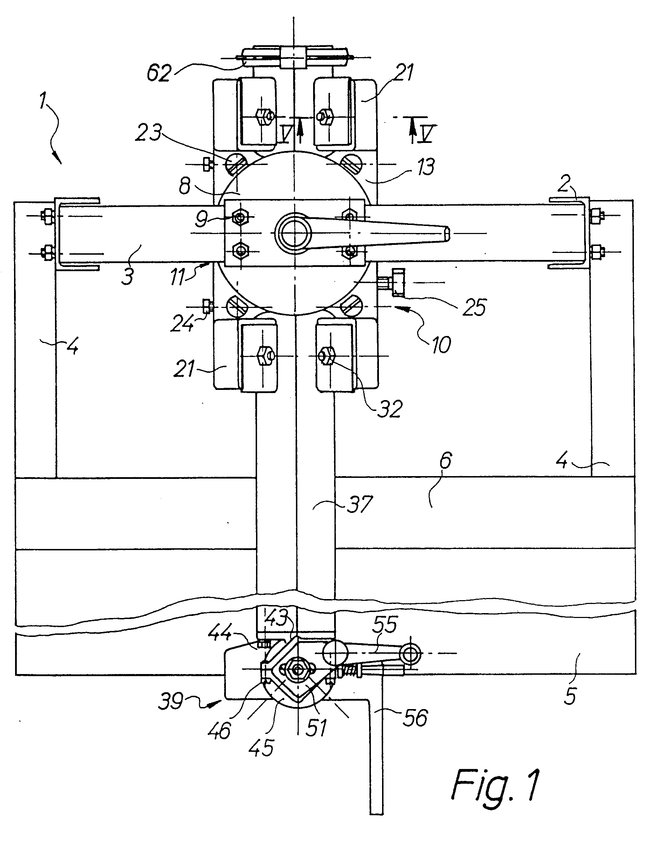

Die Lagerungs-Stellwinkel-Baugruppe 10 enthält ein Kreuzstück 11, dessen Grundbestandteile ein vertikaler, nach oben geschlossener und nach unten offener Hohlzylinderteil 12, dessen Durchmesser, der vorteilhafterweise mit dem der Kreisrundplatte 8 übereinstimmt, mehrfach größer als seine Höhe ist, und am Sockelabschnitt des Hohlzylinderteils 12 angeschlossene vier Flanschlaschen 13 (Fig. 1) sind, die derart ausgebildet und in einer gemeinsamen waagerechten Ebene angeordnet sind, daß sie in Draufsicht ein Quadrat bilden, dessen Seitenlänge im wesentlichen oder vorteilhafterweise dem Durchmesser des Hohlzylinderteils 12 gleicht.

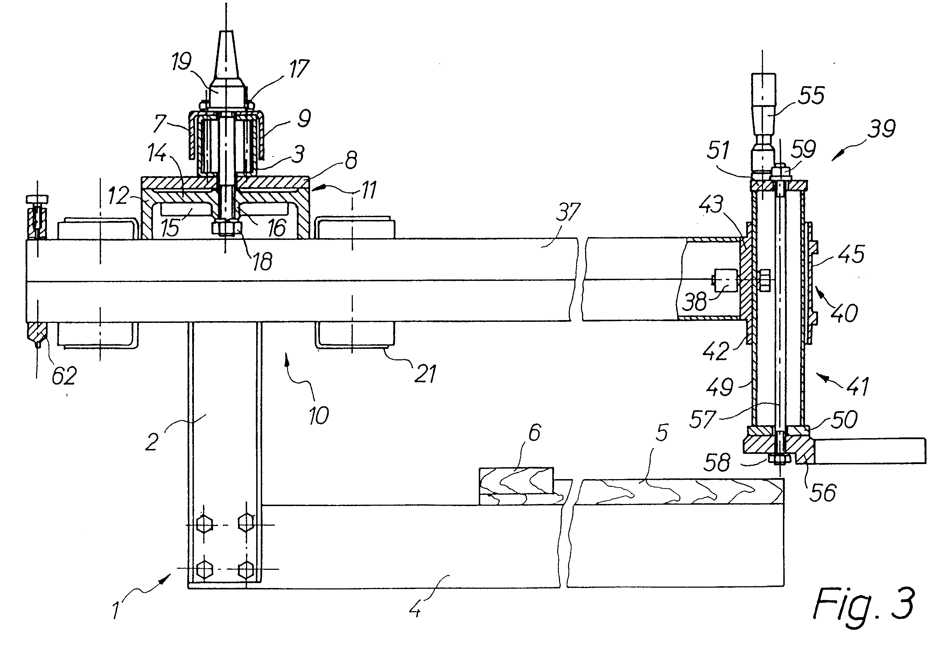

Der Innenhohlraum des Kreuzstückes 11 ist aus Fertigungsgründen vorzugsweise zylindrisch. Eine Deckenplatte 14 (Fig. 3) des Hohlzylinderteils 12 des Kreuzstücks 11 ist an ihrer Innenseite mit sternartig angeordneten (vom Kreuzpunkt aus sich radial erstreckenden) Verstärkungsrippen 15 versehen, die in ihrem mit der geometrischen Achse des Kreuzstückes 11 zusammenfallenden Kreuzpunkt einen nabenartigen Ansatz 16 bilden.

Der Aufhängeträger 7, der Querträger 3 und die Kreisrundplatte 8 sind vorteilhafterweise einheitlich durchbohrt, und durch dieses Verbundloch ist eine Stehschraube 17 (Fig. 3) eingesetzt, die durch ein mittiges Gewindeloch der Deckenplatte 14 des Hohlzylinderteils 12 des Kreuzstücks 11 eingeschraubt und auf der unteren Seite der Deckenplatte 14 auf den mittigen Ansatz 16 aufliegend mit einer Gegenmutter 18 festgezogen ist. Von oben her ist, auf dem Aufhängeträger 7 aufliegend, eine Abspannungs-/Festziehmutter 19 auf die Stehschraube 17 aufgeschraubt, wobei die Festziehmutter 19 vorzugsweise als eine mit einer Betätigungshandhabe versehene Hutmutter ausgebildet ist.

Ein Mantelflächenstreifen des an die Kreisrundplatte 8 angrenzenden Abschnitts des Hohlzylinderteils 12 des Kreuzstücks 11 ist mit einer in sich geschlossenen 4x90°-Winkelmesser-Gradeinteilung 20 versehen, deren je zwei Teil-Gradeinteilungen, die jeweils Winkelwerte von 0-90° aufweisen, in der einen Richtung gegen die gemeinsame 90°-Position und in der anderen Richtung gegen die gemeinsame 0°-Position zu- bzw. abnehmen (es kommen folglich nur zwei 0°- und zwei 90°-Positionen vor).

Bei einer vorteilhaften Ausbildung der Einrichtung ist die Winkelmesser-Gradeinteilung 20 als Millimeter-Gradeinteilung auf einem gesonderten Metallband aufgedruckt, und dieses ist an einer entsprechend bearbeiteten Aufnahmefläche des Kreuzstücks 11 angebracht. Es liegt nahe, daß der Umfang des Hohlzylinderteils 12 mithin 4x90 (= 360) mm beträgt, worin ein Dimensionierungsausgangspunkt für die Realisierung der Einrichtung enthalten ist.

Die Winkelmesser-Gradeinteilung 20 ist in der Weise festgelegt, daß ihre beiden 0°-Positionen mit Endpunkten der einen gedachten Mittellinie des oben erwähnten, durch die Flanschlaschen 13 des Kreuzstücks 11 gebildeten Quadrats, und deren beiden 90°-Positionen mit Endpunkten der anderen Mittellinie zusammentreffen. Zwei Vergleichs-, d.h. festgelegte, Winkelmesser-Striche zur Winkeleinstellung des Kreuzstücks 11 und der darauf befestigten Bestandteile der Einrichtung sind auf der Mantelfläche der Kreisrundplatte 8 in einer rechtwinklig zu dem Querträger 3 und durch die Achse der Stehschraube 17 gelegenen vertikalen Ebene angeordnet.

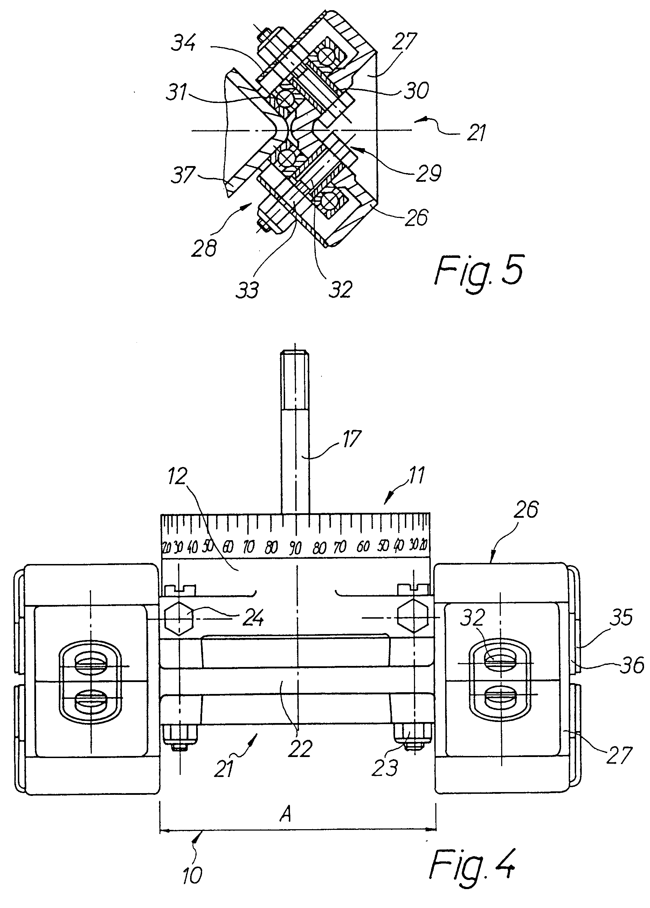

Weitere Bestandteile der Lagerungs-Stellwinkel-Baugruppe 10 sind zwei Gehäuse-Seitenstücke 21 (Fig. 4), die derart von unten an das Kreuzstück 11 angeschlossen sind, daß jedes der beiden auf zwei Flanschlaschen 13 des Kreuzstücks 11 aufgehängt ist, wobei sie zueinander parallel und gegenseitig mit Abstand voneinander angeordnet sind.

Die Gehäuse-Seitenstücke 21 sind in vorteilhafter Ausbildung untereinander im wesentlichen gleich und sind in bezug auf die oben erwähnte vertikale Ebene spiegelsymmetrisch gestellt. Gesehen in der Richtung normal zu der eben genannten vertikalen Ebene, d.h. parallel zum Verlauf des Querträgers 3, ähnelt die Ausbildung eines Gehäuse-Seitenstücks 21 etwa der des Buchstabens H, dessen Breite ein Mehrfaches seiner Höhe ist. Die Erstreckung A (Fig. 4) eines den H-Steg darstellenden Abschnitts 22 des Gehäuse-Seitenstücks 21 ist an die Seitenlänge des oben erwähnten, durch die Flanschlaschen 13 des Kreuzstücks 11 gebildeten Quadrats angepaßt.

Zwecks Verbindung des Kreuzstücks 11 mit den Gehäuse-Seitenstücken 21 ist durch jede Flanschlasche 13 und den Abschnitt 22 ein Loch ausgeführt, durch das eine Schraube 23 gesteckt ist. Sie ist in vorzugsweiser Ausbildung derart angeordnet, daß ihr Kopf auf der oberen Oberfläche der Flanschlasche 13 aufliegt und ihre Mutter von unten zum Abschnitt 22 hingedrückt ist.

Die für die Schrauben 23 vorgesehenen Löcher in den beiden Flanschlaschen 13, die das eine der Gehäuse-Seitenstücke 21 tragen, sind in der Richtung quer zu den Gehäuse-Seitenstücken 21 als Langlöcher ausgeführt. (Es handelt sich um eine praktisch annehmbare Lösung; im übrigen würde dies für sämtliche vier Löcher und für beide Gehäuse-Seitenstücke gelten.) In der Längsachse des jeweiligen Langloches der Flanschlaschen 13 ist von der freien Seite der jeweiligen Flanschlasche 13 her bis zu dem erwähntem Langloch ein Gewindeloch ausgeführt, in das eine Schraube 24 eingeschraubt ist. Der Abschnitt 22 des anderen der beiden Gehäuse-Seitenstücke 21 ist vorteilhafterweise auf seiner waagerechten Symmetrieachse mit einem quer in der Richtung gegen das erste Gehäuse-Seitenstück 21 verlaufenden Gewindeloch versehen, in das ein Schraubbolzen 25 eingeschraubt ist, der mit einem entsprechenden Handhabungsknopf versehen ist. Alternativ, was jedoch nicht zeichnerisch dargestellt ist, kann der Schraubbolzen 25 nur einen Teil der Wandstärke des Gehäuse-Seitenstücks 21 einnehmen und der Rest der Wandstärke wird durch einen zylindrischen Ansatz eingenommen.

Der jeweilige vertikale Abschnitt 26 des Gehäuse-Seitenstücks 21, der einen der vertikalen H-Schenkel bildet, ist im vertikalen Querschnitt (Fig. 4), der parallel zu den z.B. Schrauben 24, 25 verläuft, etwa dem Zeichen Σ ähnlich ausgebildet, das so deformiert ist, daß darin nur Winkel von 90° (auf der Gegenseite: 270°) vorkommen. Der Abschnitt 26 ist in bezug auf den Abschnitt 22 so angeordnet, daß sich die obere und die untere äußere Winkelkante des Abschnitts 26 in derselben vertikalen Ebene wie die seitliche Mantelfläche des Abschnitts 22 befinden.

Der Abschnitt 26 weist ferner zwei vertikale Schließwände 27 auf, von denen die eine als Endwand dient und die andere an den Abschnitt 22 angrenzt. Die Schließwand 27 ist so ausgebildet, daß ihr Umriß dem oberen und unteren Arm des Σ-Profils folgt, wobei er die obere und die untere äußere Winkelkante des Σ-Profils einfach verbindet, während er die freien oberen und unteren Endpunkte des Σ-Profils über eine Umrißlinie verbindet, die einem gebrochenen Viersegment-Zeichen 3 (= dem Spiegelbild des Zeichens Σ) ähnelt, bei dem wiederum das Merkmal vorliegt, daß alle Winkel 90° (270°) betragen, und wobei die mittigen Winkelpunkte der Σ- und 3-Profile zusammenfallen.

Das Ergebnis einer derartigen Ausbildung des Abschnitts 26 ist es, daß der Abschnitt 26 von einer Seite zwei im wesentlichen parallelepipedartige, zu zwei Seiten hin offene Kammern 28 aufweist, und von der anderen Seite eine zur Seitenrichtung hin offene, in ihrem Wesen als ein Dreiseitenprisma ausgebildete Kammer 29 vorliegt.

Die zwischen der Kammer 29 und den Kammern 28 verlaufende Wand des Abschnitts 26 ist jeweils gelocht und in die somit vorhandene Durchbohrung ist eine Hülse 30 eingesetzt. Auf die in die Kammer 28 vorspringende Hülse 30 ist seitens der Kammer ein Wälzlager 31 aufgeschoben. Durch die Hülse 30 ist seitens der äußeren Kammer 29 eine Schraube 32 eingesetzt, auf die eine Mutter 33 aufgeschraubt ist, die unter Zwischenschaltung eines (nicht dargestellten) Unterlegelements das Wälzlager 31 beaufschlagt und dieses an eine entsprechend aufbereitete Lagerungsfläche in der Kammer 28 anpreßt.

Über die Mutter 33 ist auf die Schraube 32 ein Deckblech 34 aufgesetzt, das somit eine der beiden Zutrittsrichtungen zur Kammer 28 verschließt und mit seinem Aufschlag 35 (Fig. 2) vor die Mantelfläche der Schließwand 27 reicht, wo zwischen der Mantelfläche der Schließwand 27 und dem Aufschlag 35 eine streifenartige Filzeinlage 36 reibschlüssig gehalten ist, deren außerhalb des Bereichs des Aufschlages 35 herausragendes freies Ende zur Kammer 28 hin abgebogen ist.

Bei der oben beschriebenen Ausbildung der Lagerungs-Stellwinkel-Baugruppe 10 bestehen somit vier Wälzlagerungsstellen, die aus je zwei im rechten Winkel zueinander verlaufenden Wälzlagern zusammengesetzt sind, wobei je zwei Lager davon eine Führungsebene, insgesamt also vier Führungsebenen, definieren. Diese sind in der vorzugsweisen Ausbildung derart angeordnet, daß sie gemeinsam einen gedachten Tunnel quadratischen Querschnitts bilden.

An den gedachten Tunnel quadratischen Querschnitts ist der Querschnitt eines Konsolbalkens 37 angepaßt, der zwischen die Wälzlager 31 der Lagerungs-Stellwinkel-Baugruppe 10 eingeschoben ist. Eventuell vorkommende geometrische Ungenauigkeiten in der Positionierung der Wälzlager 31 werden einfach dadurch behoben, daß man das verschiebbare Gehäuse-Seitenstück 21 zum Konsolbalken 37 hin anrückt (= man löst die Schrauben 23 und zieht nach Gefühl die Schrauben 24 nach) und ihn danach wiederum befestigt.

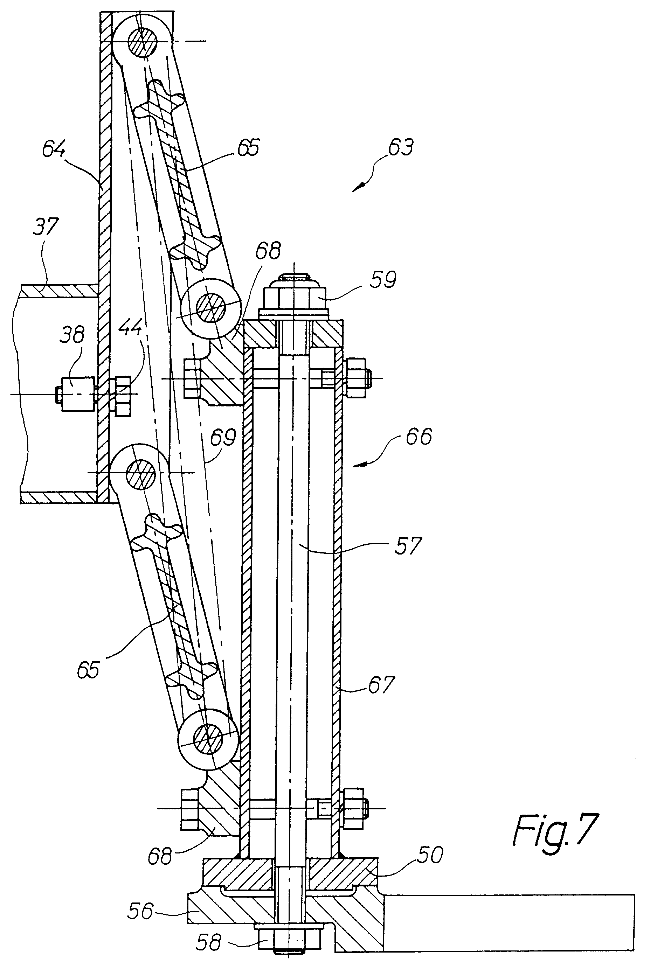

Der Konsolbalken 37 an sich ist vorteilhafterweise ein auf ebene Flächen geschliffenes, galvanisch überzinktes und danach passiviertes, d.h. mit Stickstoff künstlich oxidiertes, um die Oberfläche mit einer Schicht dünnen Oxids, vorteilhaft Zinkoxids, überzogenes Stahlrohr quadratischen Querschnitts mit abgefasten oder abgerundeten Längskanten. In einfacher Ausführung sind beide Enden (bei anspruchsvoller Ausführung nur eines davon) des erwähnten Rohrs offen, wobei im Bereich des offenen Endes (vgl. Fig. 3 und 7) auf der Innenseite, vorteilhafterweise in den gegenüberliegenden Ecken des Rohrs, je ein Mutteransatz 38 zum Aufhängen einer Anbaulagerung zur Aufnahme der Antriebs-/Bearbeitungseinheit angebaut ist.

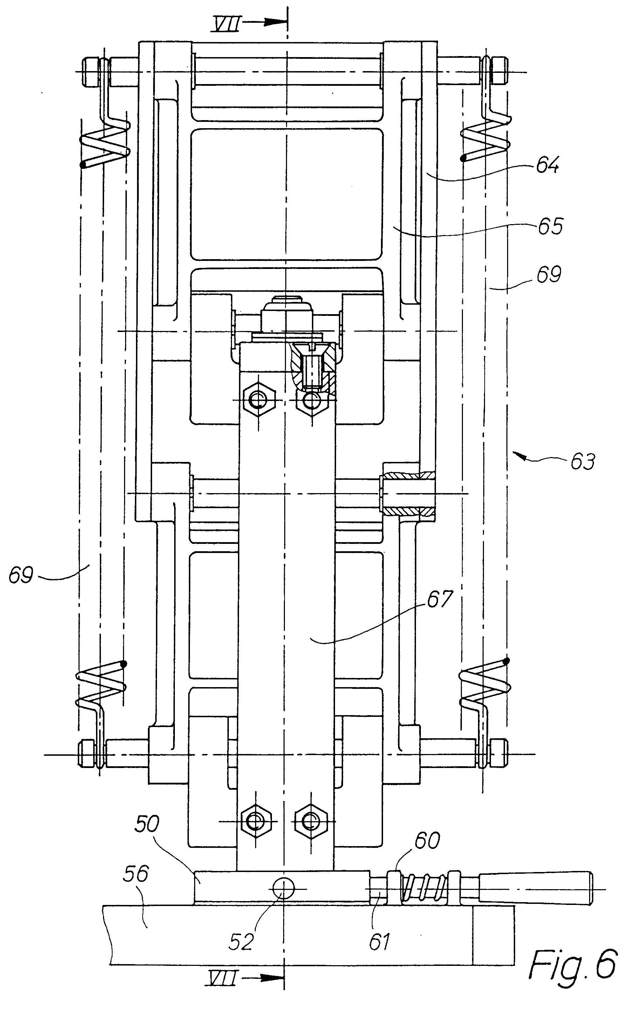

Die Ausbildung der Anbaulagerung zur Aufnahme der Antriebs-/Bearbeitungseinheit richtet sich danach, was für Bearbeitungsvorgänge man unter Zuhilfenahme der vorliegenden Einrichtung durchführen wird bzw. was für eine Antriebs-/Bearbeitungseinheit man an die Einrichtung anbauen wird. Die Erfindung bietet zwei Lösungen: Die eine ist in den Fig. 1-3 veranschaulicht und ist zu einer geradlinigen Änderung der Höhenlage eines Werkzeugs bestimmt, und die andere ist in den Fig. 6-7 dargestellt und zu einer bogenförmigen Änderung der Höhenlage bestimmt. In beiden Fällen besteht die Möglichkeit, das Werkzeug um eine vertikale Achse um 90° zu verschwenken. Die Antriebs-/Bearbeitungseinheit 39 enthält eine festgelegte Baugruppe 40 und eine bewegbare Baugruppe 41.

Die festgelegte Baugruppe 40 enthält ein in vertikaler Ebene geteiltes vertikales rohrförmiges Gehäuse 42, dessen Hohlraum in Draufsicht ein Quadrat ist, dessen Diagonale in einer durch die vertikale Diagonale des Konsolbalkens 37 verlaufenden vertikalen Systemebene der Lagerungs-Stellwinkel-Baugruppe 10 liegt. Das Gehäuse 42 enthält einen Flanschteil 43, der unter Zwischenschaltung von Schrauben 44 mit den Mutteransätzen 38 des Konsolbalkens 37 verbunden ist, und ein Gegenstück 45, das mittels Schrauben 46 an den Flanschteil 43 angeschlossen ist. Das Gegenstück 45 des Gehäuses 42 umfaßt zwei Paare stiftschrauben 47, zu denen stirnseits jeweils ein (nicht dargestellter) zylindrischer Stift angeordnet ist, der in den Hohlraum des Gehäuses 42 rechtwinkelig zu der zugehörigen ebenen Fläche des Teils 45 reicht. Am oberen Ende des Flanschteils 43 des Gehäuses 42 ist von seiner einen Seite ein Ansatz 48 (Fig. 2) angeformt, in den ein parallel zur Achse des Gehäuses 42 verlaufendes Gewindeloch eingeschnitten ist.

Die bewegbare Baugruppe 41 der Antriebs-/Bearbeitungseinheit 39 enthält ein an den Querschnitt des Hohlraums des Gehäuses 42 angepaßtes Rohr 49, das von unten durch eine unlösbar angebaute, mittig gelochte Rundplatte 50 und von oben durch eine lösbar angebaute, mittig gelochte Verbindungsplatte 51 abgeschlossen ist. Die Rundplatte 50 ist auf ihrem Umfang mit zwei auf einem Umfangsbogen von 90° angeordneten Raststellen 52 (Fig. 2) versehen. Die Verbindungsplatte 51 ist mit einem oberhalb des Ansatzes 48 des Gehäuses 42 angeordneten Radialansatz 53 versehen. Der Ansatz 53 ist mit einem (nicht dargestellten) vertikalen Lagerungsloch versehen, in das mit ihrem gewindelosen Endabschnitt eine Spindel 54 eingesetzt ist, die ihrerseits ins Gewindeloch des Ansatzes 48 eingeschraubt ist. Auf den oberhalb des Radialansatzes 53 vorspringenden Teil des gewindelosen Endabschnitts der Spindel 54 ist eine mit der Spindel 54 lagefest verbundene Kurbel 55 zum Drehen der Spindel 54 aufgeschoben. Selbstverständlich ist die Axiallage der Spindel 54 im Radialansatz 53 entsprechend gesichert.

Die oben erwähnten Stiftschrauben 47 gewährleisten mittels zugehöriger zylindrischer Stifte das Anliegen des Rohrs 49 an den Führungsflächen des Flanschteils 43 des Gehäuses 42.

Für die Bearbeitung des Rohrs 49 gilt dasselbe wie für die Bearbeitnng des Konsolbalkens 37.

Zur Rundplatte 50 ist von unten her ein besonders ausgebildeter Adapter 56 herangezogen (dieser kommt in ungeänderter Ausbildung auch beim Ausführungsbeispiel der Antriebs-/Bearbeitungseinheit nach Fig. 6-7 vor), der mittels einer Stehschraube 57 - diese ist von oben in ein mittiges Gewindeloch des Adapters 56 eingeschraubt, von unten mittels einer Gegenmutter 58 festgezogen, nach oben durchs Rohr 49 bis oberhalb der Verbindungsplatte 51 geführt und von oben mittels einer Gegenmutter 59 festgezogen - an der Rundplatte 50 angepreßt ist. Die Ausbildung des Adapters 56 richtet sich nach der jeweiligen tragbaren, mit einem eigenen Arbeitsantrieb ausgerüsteten Maschine, die man an die vorliegende Einrichtung anbauen wird; die Ausbildung des Adapters ist unterschiedlich und wird daher bezüglich der Anschlußgegebenheiten nicht näher beschrieben. Die Erfindung sieht jedoch das Bestimmen der Winkellage des Adapters 56 in bezug auf die Rundplatte 50 vor. Zu diesem Zweck sind an der oberen Oberfläche des Adapters zwei Ansätze 60 angeformt, die eine auf bekannte Weise federnd abgestützte, in bezug auf die Rundplatte 50 radial gestellte lageblockierende Klinke 61 tragen, die mit der einen oder der anderen Raststelle 52 der Rundplatte 50 zusammenarbeitet.

Zur Begrenzung des Hubs des Konsolbalkens 37 bzw. zur Verhinderung des unwillkürlichen Ausziehens des Konsolbalkens 37 aus der Lagerungs-Stellwinkel-Baugruppe 10 ist ein verschiebbarer und festlegbarer Sicherungsring 62 auf das freie Ende des Konsolbalkens 37 aufgeschoben.

Die vorliegende Einrichtung ermöglicht dem Benutzer einer an den Adapter 56 angebauten Maschine das Verschieben dieser Maschine nach oben oder unten und/oder hin oder her, in dem letzterwähnten Fall unter einen beliebigen Winkel in bezug auf den Verlauf des Ständers 1.

Die Antriebs-/Bearbeitungseinheit 63 (Fig. 6-7) ist im wesentlichen ein Vier-Glied-Gelenkmechanismus. Er umfaßt einen an den Konsolbalken 37 angeschlossenen vertikalen Träger 64, dessen unterer Rand mit dem unteren Rand des Konsolbalkens 37 in einer Ebene liegt. Der Träger 64 ist hier ein feststehendes Glied des Vier-Glied-Gelenkmechanismus. An das obere und das untere Ende des Trägers 64 sind um waagerechte Achsen verschwenkbare, vorzugsweise gleiche Arme 65 gelenkig angeschlossen, deren andere Enden mit einer Koppel-Baugruppe 66 gelenkig verbunden sind.

Die Koppel-Baugruppe 66 enthält ein Rohr 67, das vorteilhafterweise einen quadratischen Querschnitt hat und an das wie im obigen Ausführungsbeispiel die Rundplatte 50 von unten angeschweißt ist. An das Rohr 67, das in diesem Ausführungsbeispiel derart ausgerichtet ist, daß die Mittellinie des Quadrats mit der vertikalen Systemebene der Lagerungs-Stellwinkel-Baugruppe 10 und des Konsolbalkens 37 zusammenfällt, ist an seinem oberen und seinem unteren Ende ein Konsolansatz 68 zur gelenkigen Verbindung mit den Armen 65 angeschlossen. Seitlich an den Armen 65 sind zwei Zugfedern 69 angeordnet, die unter den vier Gelenkstellen die obere, ruhende und die untere, verschwenkbare Achse miteinander verbinden.

Die an den Adapter 56 angebaute Arbeitsmaschine kann bei der erfindungsgemäß konzipierten Antriebs-/Bearbeitungseinheit 63 in der vertikalen Systemebene der Einrichtung in einem durch die Arme 65 bestimmten Bogen bewegt werden (gehoben und/oder abgesenkt werden).

## Patentansprüche

1. Einrichtung zur Aufnahme eines Werkstücks und eines handbetätigbaren motorgetriebenen Werkzeugs,
mit einem Adapter (56) zur Aufnahme des motorgetriebenen Werkzeugs, der von unten an ein vertikales, höhenverstellbares Rohr (49; 67) angeschlossen ist,
mit einer um eine vertikale Achse drehbaren Lagerungs-Stellwinkel-Baugruppe (10) ,
mit zwei vertikalen Trägern (2), die parallel zu einer Seite eines Arbeitstisches (5) angeordnet und durch einen Querträger (3) miteinander verbunden sind,
dadurch gekennzeichnet,
daß die Lagerungs-Stellwinkel-Baugruppe (10) am Querträger (3) aufgehängt ist und
daß das höhenverstellbare Rohr (49,67) mit einem waagerecht angeordneten Konsolbalken (37) verbunden ist, der, zur Durchführung einer geradlinigen Bewegung rollengelagert, an der Lagerungs-Stellwinkel-Baugruppe (10) aufgehängt ist.

2. Einrichtung nach Anspruch 1, dadurch gekennzeichnet, daß die Lagerungs-Stellwinkel-Baugruppe (10) aus einem Kreuzstück (11) besteht und zwei daran angeschlossene Gehäuse-Seitenstücke (21) aufweist.

3. Einrichtung nach Anspruch 2, dadurch gekennzeichnet, daß das Kreuzstück (11) aus einem am oberen Abschnitt seiner Mantelfläche mit einer Winkelmesser-Gradeinteilung (20) versehenen Hohlzylinderteil (12) besteht, an dessen Sockelteil vier einen quadratischen Grundriß bildende Flanschlaschen (13) angeformt sind, von denen je zwei jeweils ein Gehäuse-Seitenstück (21) tragen.

4. Einrichtung nach Anspruch 3, dadurch gekennzeichnet, daß an die beiden das jeweilige Gehäuse-Seitenstück tragenden Flanschlaschen (13) ein waagerechter Abschnitt (22) als Steg des in Form eines überbreiten Buchstabens H ausgebildeten Gehäuse-Seitenstücks (21) angeschlossen ist.

5. Einrichtung nach Anspruch 4, dadurch gekennzeichnet, daß ein jeweiliger, an den waagerechten Abschnitt (22) angeschlossener, den vertikalen Teil des Buchstabens H bildender Abschnitt (26) des Gehäuse-Seitenstücks (21) im Querschnitt als das Zeichen Σ ausgebildet ist, das so geformt ist, daß sämtliche inneren Winkel jeweils 90° betragen, wobei der Abschnitt (22) in Längsrichtung beidseitig durch je eine quergestellte Schließwand (27) begrenzt ist und in durch die beiden Schließwände (27) begrenzte obere und untere Kammern (28) des jeweiligen Abschnitts (26) des Gehäuse-Seitenstücks (21) je ein Wälzlager (31), das mit der Oberfläche des Konsolbalkens (37) zusammenarbeitet, lagefest eingebaut ist.

6. Einrichtung nach einem der Ansprüche 1 bis 5, dadurch gekennzeichnet, daß der Konsolbalken (37) als Stahlrohr quadratischen Querschnitts augebildet ist, dessen eine Diagonale vertikal verläuft.

## Claims

1. Device for receiving a workpiece and a motor-driven, manually operated tool, comprising
an adapter (56) for receiving the motor-driven tool, which adapter (56) is connected from below to a vertical elevation-adjustable tubing (49; 67),
an assembly (10) for guiding and adjusting the direction of a cantilever girder, the assembly (10) being swingable around a vertical axis, and
two vertical posts (2) arranged in parallel to one side of a worktable (5) and interconnected by means of a traverse (3),
characterized in that
the assembly (10) for guiding and adjusting the direction of a cantilever girder is suspended on the traverse (3), and
the elevation-adjustable tubing (49; 67) is connected to a horizontal cantilever girder (37) engaged by means of roller bearings by the assembly (10) for guiding and adjusting the direction of the said cantilever girder to accomplish a rectilinear movement thereof.

2. Device as in claim 1, characterized in that the assembly (10) for guiding and adjusting the direction of a cantilever girder comprises a crosspiece (11) and two housing sidepieces (21) connected thereto.

3. Device as in claim 2, characterized in that the crosspiece (11) comprises a hollow-cylinder part (12) provided with a graduated protractor scale (20) arranged at an upper section of its mantle surface, with four flange rims (13) being provided at its bottom section, the flange rims (13) in plan forming a square, with two of them each supporting a housing sidepiece (21).

4. Device as in claim 3, characterized in that to both flange rims (13) supporting a housing sidepiece each, a horizontal part (22) as a web section of the housing sidepiece (21) designed as a broad H is connected.

5. Device as in claim 4, characterized in that either section (26) of each housing sidepiece (21), which section is connected to the horizontal part (22) and forms the vertical part of H, is embodied - in vertical cross section - similarly to a Σ designed in a defined manner so that all inner angles are 90° each, with the horizontal part (22) being limited in the longitudinal direction at both ends by a transverse wall (27), and a roller bearing (31) cooperating with a mantle surface of the cantilever girder (37) being stationarily incorporated into an upper and a lower chamber (28) of each section (26) of the sidepiece (21), with the chambers (28) being limited by the two transverse walls (27).

6. Device as in any of the claims 1 to 5, characterized in that the cantilever girder (37) is embodied as a square-sectioned steel tubing with one of the diagonals being vertical.

## Revendications

1. Dispositif pour la réception d'une pièce et d'un outil actionné à la main et entrainé par un moteur,
comportant un adaptateur (56) pour la réception de l'outil entraîné par moteur, qui est raccordé par le bas à un tube (49, 67) vertical ajustable en hauteur,
comportant un ensemble (10) de montage et d'ajustement angulaire, qui peut tourner autour d'un axe vertical,
comportant deux supports verticaux (2) qui sont disposés parallèlement à un côté d'une table de travail (5) et qui sont reliés l'un à l'autre par un support transversal (3),
caractérisé en ce que
l'ensemble (10) de montage et d'ajustement angulaire est suspendu au support transversal (3), et
en ce que le tube ajustable en hauteur (49, 67) est relié à une poutrelle de console (37) disposée de niveau, et qui, en vue d'exécuter un déplacement rectiligne en appui sur des galets, est suspendue à l'ensemble (10) de montage et de positionnement angulaire.

2. Dispositif selon la revendication 1, caractérisé en ce que l'ensemble (10) de montage et de positionnement angulaire est constitué d'une pièce en croix (11) et de deux pièces latérales de boîtier (21) qui y sont raccordées.

3. Dispositif selon la revendication 2, caractérisé en ce que la pièce en croix (11) est constituée d'une pièce en cylindre creux (12) dotée dans la partie supérieure de sa surface d'enveloppe d'une division en degrés (20) de mesure d'angle, sur la partie de socle de laquelle sont formées quatre pattes de bride (13) formant un périmètre carré, et dont deux portent chaque fois une pièce latérale de boîtier (21).

4. Dispositif selon la revendication 3, caractérisé en ce que sur les deux pattes de bride (13) portant chaque pièce latérale de boîtier se raccorde une partie horizontale (22) qui sert de traverse pour la pièce latérale de boîtier (21) configurée sous la forme d'une lettre H de largeur exagérée.

5. Dispositif selon la revendication 4, caractérisé en ce qu'une partie (26) de la pièce latérale de boîtier (21), raccordée à la partie horizontale (22) et formant la partie verticale de la lettre H, est configurée en section transversale sous la forme d'un signe Σ qui est configuré de telle sorte que tous les angles intérieurs valent chacun 90°, la partie (22), dans la direction longitudinale étant délimitée de chacun des deux côtés par une paroi de fermeture (27) posée transversalement, et dans une chambre supérieure et une chambre inférieure (28), délimitées par les deux parois de fermeture (27), de chaque partie (26) de la pièce latérale de boîtier (21), un palier de roulement (31), qui coopère avec la surface de la poutrelle de console (37), est chaque fois monté en position fixe.

6. Dispositif selon l'une des revendications 1 à 5, caractérisé en ce que la poutrelle de console (37) est configurée comme tube d'acier de section transversale carrée, dont une diagonale s'étend verticalement.
